# EUROPEAN PATENT APPLICATION

(11) **EP 4 749 122 A2**
(43) Date of publication of application: **27.05.2026**
(21) Application number: 26169580.3
(22) Date of filing: 27.07.2022
(51) Int. Cl.: F03D 13/25

(54) **CRANE BOOM PROVIDED WITH A TAGLINE SYSTEM**

(30) Priority: 30.07.2021 NL 2028886
(62) Divisional of application: 22751402.3
(71) Applicant: Itrec B.V., 3115 HH Schiedam (NL)
(72) Inventor: WIECK, Bart Otto Fredrik, 3115 HH Schiedam (NL); VAN DER LINDE, Adrianus, 3115 HH Schiedam (NL)
(74) Representative: EP&C

(57) **Abstract**

A crane has a crane boom which is provided with a tagline system for controlling a load lifted by the crane, e.g. a wind turbine rotor blade in horizontal orientation. The tagline system comprises four laterally spaced elongated guide members extending along the crane boom and four tagline assemblies which each comprise a tagline, a tagline winch therefor, and a respective travelling block mounted on a respective guide member for travel along the guide member.

## Description

The present invention relates to the field of cranes having a crane boom that is provided with a tagline system for controlling a load lifted by the crane, e.g. a wind turbine component, e.g. a wind turbine rotor blade that is lifted in a horizontal orientation.

An example of a crane is shown in EP 2 889 251. This document, e.g. in figure 1 thereof, discloses a crane with a crane boom having a length, which crane boom is provided with a tagline system for controlling a load lifted by the crane, e.g. a wind turbine component, e.g. a wind turbine rotor blade in horizontal orientation. The tagline system comprises a guide wire assembly with a guide wire extending along the boom, the guide wire having a lower end and an upper end. A tensioning winch is connected to the lower end of the guide wire and the upper end is secured to the crane boom at an anchoring point. The crane boom further has a tagline assembly, which comprises:
- a tagline,
- a tagline winch for the tagline,
- a travelling block that is mounted on the guide wire for travel along the guide wire.

EP 2 889 251 also discloses that the tagline system comprises a top traverse which is mounted on the crane boom and projects from the crane boom. The top traverse provides, at a spacing from the crane boom, a support point for the guide wire close to its upper end.

The dimensions of wind turbines have steadily increased over the recent years, mainly in view of economical efficient energy generation. As a result, wind turbines having a capacity over 10 MW, e.g. 14 MW or recently 15 MW are now commercially available. These wind turbines have very large rotor blades, e.g. over 75m, or even over 100m in length. For example, each blade of the newly proposed Vestas 15 V236 turbine measures 115.5 meters in length. The Siemens Gamesa's SG 14-222 DD direct drive turbine has a blade of 108 meters in length. This market development further increases demands on the installation of a rotor blade to an offshore wind turbine. The mass of a single blade may be well in excess of 50 tons.

Due to the mass and dimensions of the present day wind turbine rotor blades, and the height of the nacelle and hub to which the rotor blade is to be fastened while suspended (via a blade lifting tool) from the crane, the forces that are to be absorbed/exerted by the tagline system are very significant. As the tagline effectively pulls the guide wire forward under load, the guide wire will deflect to an undesirable degree. The inventors note that tensioning of the guide wire to reduce deflection of the guide wires has its own limitations as well.

The first aspect of the invention aims to provide improvements of the known crane and operation thereof, in particular in view of behavior of the tagline system when hoisting a significant load, e.g. to a significant height, e.g. when lifting a wind turbine rotor blade in horizontal orientation for fastening thereof to the hub of a (offshore) wind turbine.

The first aspect of the invention provides a method according to clause 1 for performing a lift operation wherein a load is lifted by means of a crane. The crane has a crane boom having a length, e.g. at least 80 meters in length, e.g. between 100 and 160 meters, which crane boom is provided with a tagline system for controlling the load that is lifted by the crane, e.g. a wind turbine component, e.g. a wind turbine rotor blade in horizontal orientation.

The tagline system comprises:
- a guide wire assembly with a guide wire extending along the boom, the guide wire having a lower end and an upper end, wherein a tensioning device, e.g. a tensioning winch, is connected to one of said lower end and upper end, and wherein the other of said lower and upper end is secured relative to the crane boom,
- a tagline assembly, comprising:
   - a tagline,
   - a tagline winch for the tagline,
   - a travelling block that is mounted on the guide wire for travel along the guide wire.

The tagline system further comprises a relocatable traverse, e.g. one per guide wire, which is configured to be mounted on the crane boom and to project from the crane boom, which relocatable traverse provides, at a spacing from the crane boom, a support for the guide wire.

The crane boom is provided with multiple traverse mounting locations that are spaced along the length of the crane boom.

The load is to be lifted in the lift operation to a predetermined lifting height, e.g. corresponding to the hub of a wind turbine when installing a rotor blade to the hub in horizontal orientation of the blade during the fastening to the hub.

Prior to the lifting of the load, the relocatable traverse is mounted to be crane boom at a selected one of the multiple traverse mounting locations, which selection is, preferably, made on the basis of the predetermined lifting height, e.g. such that the relocatable traverse is closely above a highest position of the travelling block of the tagline system when the load is lifted to said predetermined lifting height.

**In** an embodiment, - for moving the relocatable traverse from one traverse mounting location to another traverse mounting location on the crane boom, e.g. in preparation for a next lift operation - the relocatable traverse is dismounted from the one traverse mounting location on the crane boom whilst remaining engaged to the guide wire, and wherein the relocatable traverse is then slid along the guide wire to the other traverse mounting location, wherein the relocatable traverse is then mounted to said traverse mounting location.

**In** an embodiment, the crane boom is provided at each of said multiple traverse mounting locations with a traverse mounting device for the relocatable traverse, which traverse mounting devices are spaced along the length of the crane boom, and wherein the relocatable traverse is provided with a cooperating mounting device allowing to mount the relocatable traverse at a selected one of the multiple traverse mounting devices.

The method of clause 1 allows the operator to place the relocatable traverse at its most effective position along the crane boom in view of the lifting operation that is to be carried out. For instance, as preferred, the lifting height may be the decisive parameter when selecting the most effective position, e.g. the relocatable traverse being located on the boom as closely as possible above the maximum height position of the travelling block of the tagline during the lifting of the load. Thereby the guide wire is supported by this traverse in relative close proximity to the travelling block when the load has been lifted to its lifting height, e.g. the lifting height corresponding to the height of the hub to which the rotor blade is to be fastened. In the process of fastening the rotor blade, e.g. using nuts to be placed on bolts projecting from the root of the blade, the taglines may play a significant role in orienting and/or stabilizing the rotor blade relative to the hub.

**In** an embodiment, the crane boom is provided with at least three traverse mounting devices spaced along the length of the crane boom. For example, three, four or five discrete traverse mounting devices are present for each relocatable traverse. As explained herein, the mounting devices may be composed of one or more tabs having a hole, e.g. the tabs being welded on main chords of the crane boom. Other mounting devices, e.g. having a socket into which a mating spigot-member of the relocatable traverse is introduced, are also possible.

In an embodiment, the multiple traverse mounting devices are spaced along the length of the crane boom by at least 5 meters from one another, e.g. between 8 and 12 meters from one another.

In an embodiment, the crane has an uppermost traverse which is distinct from the relocatable traverse and which is mounted at a fixed location to the crane boom, closer to a tip of the boom than the possible mounting locations of the relocatable traverse, e.g. the guide wire passing from said uppermost traverse to an anchoring point on the crane boom.

In an embodiment, the crane boom has a central plane, and the tagline system is configured such that - in each of the mounting positions of the relocatable traverse -, e.g. as provided by the multiple traverse mounting devices, the lateral distance from the guide wire support provided by the relocatable traverse relative to the central plane is the same. For example, the relocatable traverse is configured and operated to be brought in different configurations thereof to compensate for different cross-sections, e.g. lateral widths, and/or thickness, of the crane boom at the various locations where the relocatable traverse is mountable on the crane boom.

In an embodiment, the relocatable traverse is composed of a frame member that is to be connected to a front main chord of the crane boom, e.g. via a cooperating mounting device to a selected one of multiple traverse mounting devices that are spaced along the length of the crane boom and provided on a front main chord of the crane boom, wherein the relocatable traverse is further composed of a brace member that is hinged to the frame member, which brace member is to be connected to a rear main chord of the crane boom, e.g. via a respective mounting device thereof to a selected one of multiple traverse mounting devices that are spaced along the length of the crane boom and provided on a rear main chord of the crane boom.

For example, the frame member and the brace member are configured to include different angles relative to one another when mounted at the various mounting, e.g. to compensate for a different cross-section, e.g. lateral width, of the crane boom at the various mounting locations.

In an embodiment, the relocatable traverse is provided with an eye through which the guide wire extends, e.g. a closed eye or an openable eye allowing for lateral insertion and/or removal of the guide wire into and out of the eye.

**In** an embodiment, the relocatable traverse is provided with a releasable clamp that clamps the guide wire, e.g. a releasable clamp.

**In** an embodiment, the crane boom has multiple traverse mounting devices, that each comprise one or more tabs having a hole, the tabs being fitted to chords of the crane boom, wherein the relocatable traverse is provided with a cooperating or mating mounting device, e.g. one or more tabs having a hole, allowing to mount the traverse at a selected one of the multiple traverse mounting devices, e.g. a bolt being mounted through the tabs on the chord and the traverse.

**In** an embodiment, the crane boom has parallel front and rear main chords extending along a lateral side thereof with lattice members between said front and rear main chords, wherein the front main chord of the crane boom is provided with multiple traverse mounting devices spaced along the length of the crane boom,
and wherein the relocatable traverse comprises an A-frame part with two leg members adjoining at an apex and at least one transverse member between the leg members, wherein the A-frame part, e.g. each leg member thereof, is provide - remote from the apex - with a cooperating or mating mounting device that is mountable to said one or more traverse mounting devices on the front main chord,
and wherein the rear main chord of the crane boom is provided with a multiple traverse mounting device spaced along the length of the crane boom,
and wherein the relocatable traverse comprises a brace member that is coupled to the apex of the A-frame at one end thereof, and that is provided remote from said one end with a cooperating or mating mounting device that is mountable to said one or more traverse mounting devices on the rear main chord.

For example, the A-frame is provided at the apex with an eye or clamp for the guide wire.

The first aspect of the invention also relates to a crane according to clause 12. Herein the tagline system further comprises at least one relocatable traverse which is configured to be mounted on the crane boom and to project from the crane boom, which relocatable traverse provides, at a spacing from the crane boom, a support for the guide wire,
wherein the crane boom is provided with multiple traverse mounting locations that are spaced along the length of the crane boom,
such that the tagline system allows to, in use, - prior to the lifting of the load - mounting of the relocatable traverse to be crane boom at a selected one of the multiple traverse mounting locations, e.g. such that the relocatable traverse is closely above a highest position of the travelling block of the tagline system when the load is lifted to a predetermined lifting height.

In an embodiment, - for moving the relocatable traverse from one traverse mounting location to another traverse mounting location on the crane boom, e.g. in preparation for a next lift operation - the relocatable traverse is configured to be dismounted from the one traverse mounting location on the crane boom whilst remaining engaged to the guide wire, and wherein the relocatable traverse is then slidable along the guide wire to the other traverse mounting location, wherein the relocatable traverse is then mountable to said traverse mounting location.

In an embodiment, the crane boom is provided at each of said multiple traverse mounting locations with a traverse mounting device for the relocatable traverse, which traverse mounting devices are spaced along the length of the crane boom, wherein the relocatable traverse is provided with a cooperating mounting device allowing to mount the relocatable traverse at a selected one of the multiple traverse mounting devices.

Further embodiments of the crane according to the first aspect are disclosed in the further clauses and in the description, e.g. with reference to the figures.

According to a second aspect thereof, the invention provides for a crane according to clause 24. Herein the tagline system further comprises at least one relocatable traverse which is configured to be mounted on the crane boom and project from the crane boom, which relocatable traverse provides, at a spacing from the crane boom, a support point for the guide wire,
wherein the crane boom has parallel front and rear main chords extending along a lateral side thereof with lattice members between said front and rear main chords,
wherein the relocatable traverse comprises an A-frame part with two leg members adjoining at an apex and at least one transverse member between the leg members, wherein the A-frame part, e.g. each leg member thereof, is provided - remote from the apex - with a mounting device that is mountable to the front main chord,
and wherein the relocatable traverse comprises a brace member that is coupled to the apex of the A-frame at one end thereof, and that is provided remote from said one end with a mounting device that is mountable to the rear main chord.

Due to the provision of the A-frame in the relocatable traverse, the support of the guide wire provided thereby is stable and robust, e.g. when subjected to the significant load by the tagline as described above.

In an embodiment, the front main chord of the crane boom is provided with multiple traverse mounting devices that are spaced along the length of the crane boom, and wherein the A-frame part, e.g. each leg member thereof, is provided remote from the apex with a mounting device that is mountable to a selected one of the mounting devices on the front main chord, and wherein the rear main chord of the crane boom is provided with multiple traverse mounting devices that are spaced along the length of the crane boom, and wherein the relocatable traverse comprises a brace member that is coupled to the apex of the A-frame at one end thereof, and that is provided remote from said one end with a mounting device that is mountable to a selected one of the traverse mounting devices on the rear main chord.

Further embodiments of the crane according to the second aspect are discussed herein with reference to the first aspect, e.g. are disclosed in the clauses and in the description, e.g. with reference to the figures.

According to a third aspect thereof, the invention provides for a crane with a crane boom having a length, which crane boom is provided with a tagline system for controlling a load lifted by the crane, e.g. a wind turbine component, e.g. a wind turbine rotor blade in horizontal orientation,
wherein the tagline system comprises:
- a guide wire assembly with a guide wire extending along the boom, the guide wire having a lower end and an upper end, wherein a tensioning winch is connected to one of said lower end and upper end, and wherein the other of said lower and upper end is secured relative to the crane boom,
- a tagline assembly, comprising:
   - a tagline,
   - a tagline winch for the tagline,
   - a travelling block that is mounted on the guide wire for travel along the guide wire,

the tagline system further comprises at least one traverse which is mounted on the crane boom and projects from the crane boom, which traverse provides, at a spacing from the crane boom, a support point for the guide wire,
characterized in that the crane boom is provided with multiple traverses spaced along the length of the crane boom,
and in that one or more of the relocatable traverses are selectively engageable and disengageable from the guide wire, and are movable, when disengaged, between a retracted position and a deployed position relative to the crane boom.

As will be appreciated, a drawback of this design is that one cannot provide just one relocatable traverse for support of a guide wire, as is preferred in the context of the first aspect of the invention. In this third aspect, multiple traverses are required for the guide wire of a tagline assembly to have the choice of the traverse that one would like to be operational for local support of the guide wire at the optimal position along the boom, e.g. in view of the planned lift operation to be performed. As explained herein, a single traverse may weigh between 500 and 1500 kg, so having multiple of them adds significant weight to the crane boom which may be undesirable. An advantage may be that there is no need for relocation of the relocatable traverse as in the first aspect of the invention. For example, the mobile traverses are each hinged to the crane boom for deployment from a retracted state, e.g. closely against the crane boom, to an operable state wherein the traverse projects from the crane boom.

According to a fourth aspect thereof, the invention provides a crane according to claim 1. The crane has a crane boom having a length, which crane boom is provided with a tagline system for controlling a load lifted by the crane, e.g. a wind turbine component, e.g. a wind turbine rotor blade in horizontal orientation,
wherein the tagline system comprises:
- four laterally spaced elongated guide members extending along the crane boom, and
- four tagline assemblies, each tagline assembly comprising:
   - a tagline,
   - a tagline winch for the tagline,
   - a respective travelling block that is mounted on a respective guide member for travel along the guide member.

Preferably, the travelling blocks are not mechanically interconnected to one another, so that their travel is basically independent from one another. This is also advantageous when the guide members are not parallel to one another, e.g. guide members being inclined relative to one another, e.g. at least over a part of their length, e.g. when considering a front view of the crane boom.

**It** is envisaged, for example, that one pair of taglines is used when performing a lift operation to control the load primarily in a horizontal plane, e.g. to control rotation of the load about a hoist cable from which the load is suspended. The other pair of taglines is primarily used for control of the load in a vertical plane, e.g. to control orientation of the load about a horizontal axis. The provision of four tagline systems, each having its own guide rail or guide wire, travelling block, and tagline, allows to use the two pairs for control of the load in horizontal plane and vertical plane respectively.

For example, the outermost tagline assemblies of the four are used for control of the load in the vertical plane, so rotation about a horizontal axis (which extends in practice in the central plane of the crane boom).

For example, the innermost tagline assemblies of the four are used for control of the load in the horizontal plane, e.g. rotation of the load about a vertical axis formed by the hoist cable or cables from which the load is suspended.

For example, during a lift operation performed by a crane according to the fourth aspect of the invention, one pair of travelling blocks is at a lower level than the other pair of travelling blocks. For example, the travelling blocks of the tagline assemblies used for control in the vertical plane of the load, are higher up along the crane boom during the lift operation than the travelling blocks of the tagline assemblies used for control in the horizonal plane of the load.

As explained, in embodiment, the load could be a blade lifting tool used for lifting a rotor blade of a wind turbine, e.g. in horizontal orientation.

As explained, the travelling blocks could be configured to follow the load during the lift operation up along the boom, so a passive motion along the respective guide member. In another embodiment, one or more, e.g. one pair of the travelling blocks, could be actively driven along the respective guide member.

In practical embodiments of the tagline system, the four guide members extending along the crane boom could be embodied as four guide wires, two guide wires and two guide rails, or four guide rails mounted to the crane boom.

An advantage of guide rails over guide wires is that the guide rails do not suffer from the issue of deflection under load, e.g. of the related tagline, e.g. as discussed herein with reference to the first aspect of the invention. Preferably, any guide rail of the tagline system is mounted at or in proximity of the front side of the crane boom, e.g. with guide wires (when also present) arranged along opposed lateral sides of the crane boom, e.g. in the manner as described herein.

In an embodiment, a guide rail is directly mounted on, or integrated with, a main chord of the crane boom. For example, in a crane boom having two crane boom legs each having main chords at the four corners of the cross-section of the respective leg, both main chords at the front could be provided with a respective rail, providing stable mounting of the rail and effective absorption of the tagline load.

In an embodiment, the crane boom has over at least a section of its length two legs, each having two main chords at a front side of the crane boom, wherein on each of said main chords, or integrated with said main chords, a guide rail of the tagline system is provided. When the legs are parallel to one another, as in a H-frame crane boom, the guide rails may extend to proximity of the tip of the boom over these chords. The boom can also have an A-frame boom design, wherein the two legs are angled to one another. Again, herein both main chords at the front side of each leg may be provided with a guide rail of the tagline system. In a lambda-design of the boom, wherein the boom continues at the apex of the two legs with a single distal boom section, e.g. as shown in WO2018/208158, the rails may continue over said distal boom section as well.

The fourth aspect of the invention also relates to a method according to claim 10 for performing a lift operation of a load by means of a crane according to the fourth aspect, wherein the load is lifted by the crane and wherein the tagline system is used to control the load.

In the drawings:
- Fig. 1 shows a in view onto the rear side thereof a crane boom of a crane according to the first and second aspect of the invention,
- Fig. 2 shows the crane boom of figure 1 in a side view,
- Figs. 3a, b show an enlargement of the inner section of the crane boom shown in figures 1 and 2,
- Fig. 4 shows a cross-section A-A of the crane boom in figure 3b,
- Figs. 5a, b show an enlargement of a central section of the crane boom shown in figures 1 and 2,
- Figs. 6a,b show an enlargement of a tip section of the crane boom shown in figures 1 and 2,
- Figs. 7, 8 show in a side view a portion of the crane boom of figure 2 the relocatable traverse at a mounting position and a further mounting position for the relocatable traverse,
- Fig. 9 shows the uppermost traverse of the crane boom of figures 1 and 2,
- Fig. 10 shows the relocatable traverse of the crane boom of figures 1 and 2,
- Figs. 11a,b,c,d shows the relocatable traverse of the crane boom of figures 1 and 2 when mounted at the various mounting positions,
- Figs. 12a,b,c, d illustrate the relocation of the relocatable traverse of the crane boom of figures 1 and 2 from one mounting position to another,
- Figs. 13a, b show, in a view corresponding to figure 1, alternative embodiments of a crane boom of a crane according to the first and second aspect of the invention,
- Fig. 14 shows a jack-up vessel equipped with a crane having the boom of figures 1 and 2,
- Figs. 15a, b show in a view onto the front side and in a view onto a lateral side a crane boom of a crane according to the fourth aspect of the invention,
- Fig. 16 illustrates the control of a load by means of the crane boom and tagline system of the fourth aspect of the invention,
- Fig. 17 schematically illustrates the arrangement of crane boom and tagline system of the figure 16 when lifting a load, here a rotor blade of a wind turbine held by a blade lifting tool,
- Figs. 18a, b illustrate a crane on a jack-up vessel equipped with a tagline system as described herein when lifting a rotor blade of an offshore horizontal axis wind turbine,
- Figs. 19a, b illustrate a crane boom according to the invention.

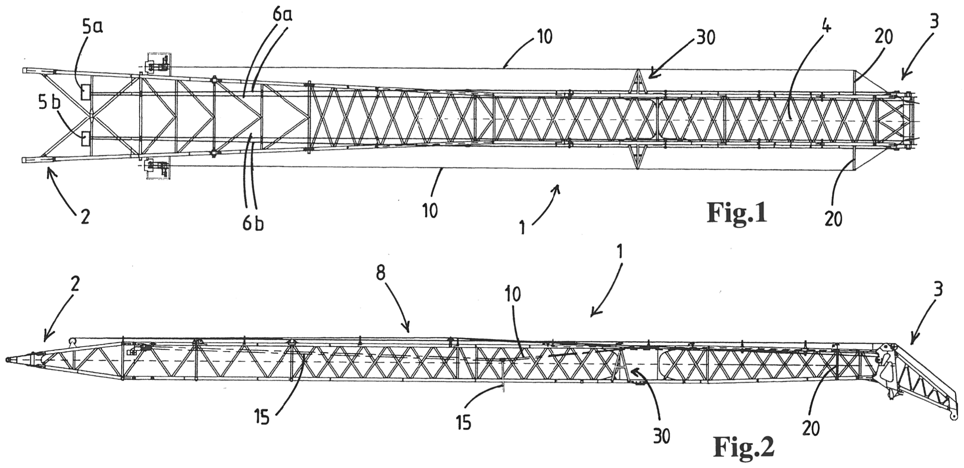

In the figure 1 a latticed crane boom 1 is shown for a crane which is not further depicted, e.g. a crane having a slewable crane housing to which the boom is pivotally mounted at its inner end 2 to perform a luffing motion about a horizontal axis.

The crane boom 1 has a length extending from its inner end 2 to a boom tip 3.

The depicted crane boom 1, shown to scale in the figures, is about 145 meters in length. As explained in the introduction, the continued increase of dimensions of (offshore) wind turbines, requires lifting operations to very large heights, which requires enormous boom lengths and places increased demands on control of the load, e.g. the rotor blade, during the lifting, and/or during fastening the blade to the hub of the wind turbine. In embodiments, the boom is at least 80 long, e.g. between 100 and 160 meters.

The crane boom 1 has a central plane 4.

The crane boom 1 is shown with hoist winches 5a,b that drive hoist cables 6a,b of the crane that extend along the length of the boom, e.g. connected to a crane hook from which a load is to be suspended to perform a lifting operation, e.g. a rotor blade of a wind turbine that is to be lifted (or lowered) in a horizontal orientation thereof.

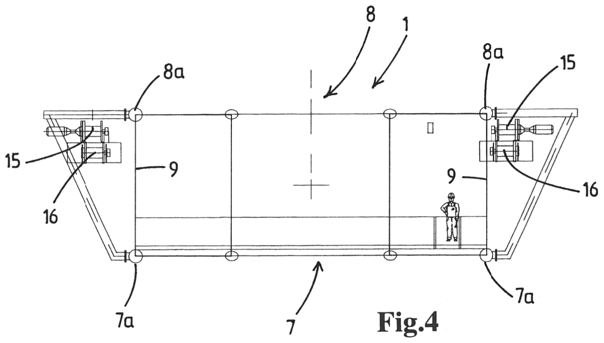

The crane boom 1 has a front side 7, which faces downwards when the boom 1 is on a substantially horizontal boom rest position, and an opposed rear side 8. The figure 4 illustrates that at each lateral side of the latticed boom 1 there is a front main chord 7a and a rear main chord 7b, interconnected by lattice members 9.

Generally, the crane boom 1 is provided with a tagline system for controlling a load lifted by the crane, e.g. a wind turbine component, e.g. a wind turbine rotor blade in horizontal orientation. The use of a tagline system on a crane boom is well-known.

At each lateral side of the crane boom, the tagline system comprises, at each lateral side of the boom, a guide wire assembly with a guide wire 10 extending along the boom 1. The guide wire, e.g. a steel wire, has a lower end and an upper end. A tensioning winch 11 is mounted on the boom 1 and is connected to the lower end of the guide wire. The upper end is secured relative to the crane boom 1, e.g. at an anchoring point.

The tagline system comprises, at each lateral side of the boom, a tagline assembly which comprises:
- a tagline 15,
- a tagline winch 16 mounted on the crane boom 1 for the tagline 15,
- a travelling block 17 that is mounted on the guide wire 10 for travel along the guide wire 10, here with sheaves for the tagline 15.

**In** the depicted embodiment, as preferred in practice, the tagline winch 16 engages on the lower end of the tagline 15. The winch 16, like the winch 11, is mounted in a winch frame that is secured to the crane boom and may have a drum for the tagline as is known in the art.

The upper end of the tagline 15 is anchored relative to the boom, as is preferred.

The tagline system as illustrated by way of example here, includes a further block 18 with a sheave for the tagline, so that the tagline runs from the block 17 to the block 18 and back again. This further block 18 is connected to the load that is to be lifted by the crane. This arrangement is known in the art.

By operating the winch 16, the distance between the blocks 17, 18 can be adapted, and thereby the orientation and/or position of the load that is lifted by the crane is controlled.

When the load is lifted or lowered by the one or more hoisting winches 4 of the crane, the tagline block 15 follows, guided by the guide wire 10 along the boom. **In** another embodiment, the block 15 is actively driven along the guide wire 10, e.g. by a further arrangement of a winch and a drive cable connected to the travelling block 15, as is also known in the art.

At each lateral side of the crane boom, the tagline system further has an uppermost traverse 20 which is mounted at a fixed location to the crane boom 1, here in proximity to the tip of the crane boom. The uppermost traverse 20 is mounted on the crane boom, projects from the crane boom, and provides, at a spacing from the crane boom, a support for the effective top zone of the guide wire 10, e.g. so that the guide wire 10 extends substantially parallel to the central plane of the crane boom.

**In** the depicted embodiment, the guide wire 10 is supported by this uppermost traverse 20 and the upper end of the guide wire is secured to an anchoring point 21 on the tip of the crane boom. In another embodiment, the upper end of the guide wire is secured to the uppermost traverse 20, e.g. with a further stabilizing wire extending from the traverse 20 to an anchoring point on the main boom.

The tagline 15 here is secured at its upper end to the uppermost traverse 20.

The crane boom 1 is provided with multiple, here four, discrete traverse mounting devices 25, 26, 27, 28 spaced along the length of the crane boom, e.g. all located in the top half of the main boom 1.

**In** addition to the fixed location uppermost traverse 20, the tagline system comprises at each lateral side of the crane boom 1, a relocatable traverse 30. As preferred, just one relocatable traverse 30 is present per guide wire 10, e.g. in addition to a fixed uppermost traverse 20.

Generally, the relocatable traverse 30 is configured to be mounted on the crane boom 1 and to project from the crane boom in order to provides, at a spacing from the crane boom, a support point for the guide wire 10, which wire 10 than extends above and below the relocatable traverse 30.

**In** more detail, the relocatable traverse 30 at each lateral side of the crane boom 1 is provided with a cooperating or mating mounting device 31 allowing to mount the relocatable traverse 30 at a selected one of the multiple traverse mounting devices 25, 26, 27, 28 spaced along the crane boom 1.

**It** is illustrated that the multiple traverse mounting devices 25, 26, 27, 28 are spaced along the length of the crane boom by at least 5 meters from one another, e.g. evenly spaced, e.g. spaced between 8 and 12 meters from one another, e.g. by 11.5 meters in this embodiment.

The uppermost traverse mounting device 28 for relocatable traverse 30 is spaced below the fixed uppermost traverse 20, e.g. by the same spacing as the other devices 25, 26, 27.

**It** is envisaged that, when the crane having the boom 1 and tagline system as discussed above, is used to perform a lift operation of a load, wherein the load is to be lifted in the lift operation to a predetermined lifting height, e.g. to the height of a hub or nacelle of a wind turbine, the selection of the traverse mounting device to which the relocatable traverse 30 is mounted is made on the basis of the predetermined lifting height. For example, the relocatable traverse 30 is mounted at the mounting location on the boom 1 which is closely above a highest position of the travelling block 15 of the tagline system when the load is lifted to this predetermined lifting height, and the relocatable traverse 30 is mounted at this selected mounting position of the crane boom 1.

So, for a lift operation wherein the lifting height is very great, the relocatable traverse 30 is mounted at the traverse mounting device 28, so that the block 15 can travel all the way up along the guide wire 10 to a maximum height fairly close to the relocatable traverse 30. Then this relocatable traverse supports and thus stabilizes the guide wire 10 effectively, avoiding undue deflection of the guide wire 10 which might occur if there was no relocatable traverse other than the fixed uppermost traverse 20. The deflection might otherwise unduly impair the accuracy of the position and/or orientation of the load that is suspended from the cable 6a,b of the crane.

**It** will be appreciated that when the lifting is done to a lower lifting height, the relocatable traverse 30 will be mounted at one of the lower lying mounting devices 25, 26, 27 on the crane boom.

**It** is illustrated that the tagline system is configured such that - in each of the positions of the relocatable traverse 30 provided by the multiple traverse mounting devices 25, 26, 27, 28 - the lateral distance from the guide wire support provided by the relocatable traverse relative to the central plane is the same.

As can be seen in figure 1, the cross-section of the crane boom 1 may vary over the length, in particular in the region where the multiple traverse mounting devices 25, 26, 27, 28 are present, which variation may be small (as here) yet noticeable, e.g. in width and/or in thickness (e.g. at the tapering of the boom towards the tip thereof).

As will be discussed in more detail below by way of example, it is envisaged that the relocatable traverse 30 is configured to be brought in different configurations thereof to compensate for different cross-section, e.g. lateral width, of the crane boom 1 at the various locations of the multiple traverse mounting devices 25, 26, 27, 28.

As is illustrated, and as preferred, the relocatable traverse 30 is composed of a frame member 35 that is to be connected via a mating mounting device thereof to a selected one of multiple traverse mounting devices 25, 26, 27, 28 spaced along the length of the crane boom as provided on the front main chord 7a of the crane boom. The relocatable traverse 30 is further composed of a brace member 39 that is hinged to the frame member 35 at a hinge that is remote from the mating mounting device of the frame 30. This brace member 39 is to be connecting via a mounting device thereof to a selected one of multiple traverse mounting devices 25, 26, 27, 28 spaced along the length of the crane boom and provided on a rear main chord 8a of the crane boom.

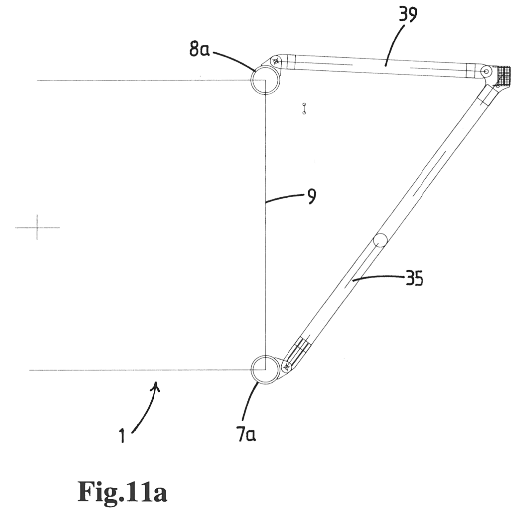

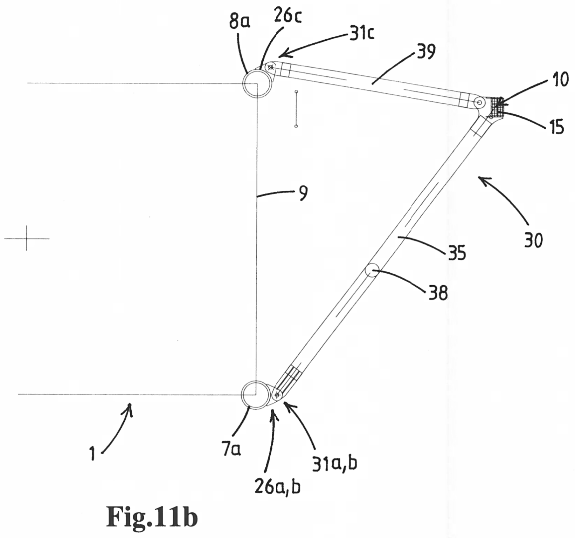

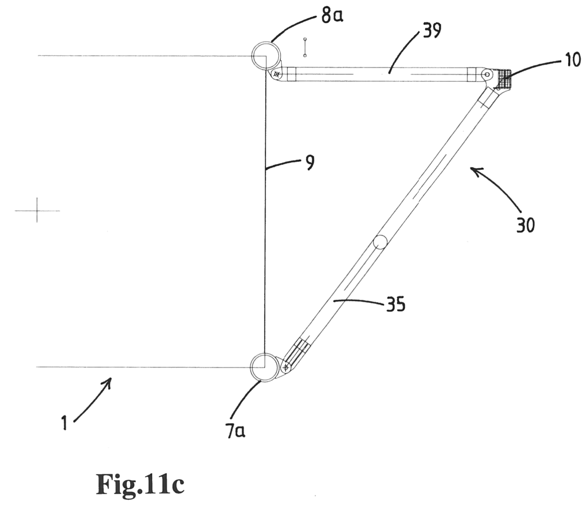

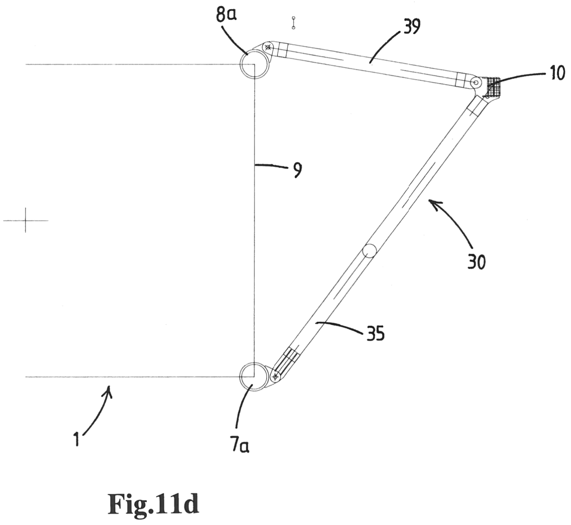

As depicted in figures 11a - d the frame member 35 and the brace member 39 include different angles relative to one another when mounted at the various locations of the multiple traverse mounting devices 25 (fig11a), 26 (fig. 11b), 27 (fig. 11c), 28 (fig. 11d), so as to compensate for a different cross-section, e.g. lateral width and/or thickness, of the crane boom 1 at these locations of the multiple traverse mounting devices 25, 26, 27, 28. For example, in a top region of the boom, the main front and rear chords will come closer to one another as the thickness of the boom reduces towards the tip, which can then be absorbed by the structure of the relocatable traverse.

As preferred, none of the frame member 35 and the brace member 39 is telescopic to provide for such compensation, yet an embodiment wherein the traverse 30 includes one or more telescopic parts for such compensation are also envisaged as embodiments.

It is illustrated that the relocatable traverse 30 is provided with an eye through which the guide wire 10 extends, e.g. a closed eye or an openable eye allowing for lateral insertion and/or removal of the guide wire into and out of the eye.

It is illustrated that the relocatable traverse 30 is also provided with an eye through which the tagline 15 extends.

As shown, the multiple traverse mounting devices each comprises tabs 25a,b,c, 26a,b,c, etc., having a hole, which tabs are fitted to chords 7a, 8a of the crane boom 1.

As shown, the relocatable traverse 30 is provided with a mating mounting device, e.g. a tab or pair of tabs 31a,b,c having a hole, allowing to mount the relocatable traverse 30 at a selected one of the multiple traverse mounting devices 25,26,27,28 , e.g. a bolt being mounted through the tabs on the chord 7a, 8a, and the relocatable traverse 30.

In more detail, the frame 35 is an A-frame part with two leg members 36, 37 adjoining at an apex and at least one transverse member 38 between the leg members. Each leg member 36, 37 is provided at one end remote from the apex with a mating mounting device, here a pair of tabs 31a, b between which a tab 25a, b is received, with a bolt being mounted through the aligned holes in the tabs.

The brace member 39, preferably embodied as a single rod, is coupled to the apex of the A-frame 35 at one end thereof. Remote from said one end the member 39 is provided with a mating mounting device 31c that is mountable to said one or more traverse mounting devices 25c on the rear main chord 8a, for example.

The A-frame 35 is provided at the apex with an eye or clamp for the guide wire 10.

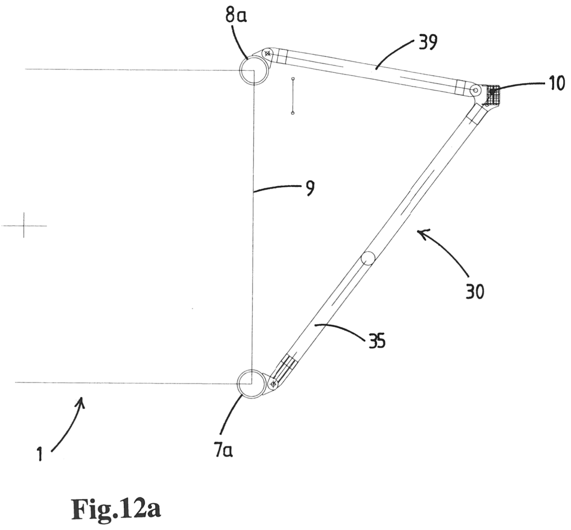

The figures 12a-d illustrate how the relocatable traverse 30 can be relocated on the crane boom, whilst remaining engaged with the guide wire 10, here also with the tagline 15. This operation is preferably done with the crane boom 1 in a boom rest position, e.g. in a substantially horizontal position. The relocation operation of the relocatable traverse 30 may be assisted by a relatively small crane, e.g. a mobile crane that rides over a deck of a vessel equipped with the crane having the crane boom as described herein.

**It** is noted that in practical embodiments, a single relocatable traverse 30 may weigh more than 500 kg, e.g. some 900 kg, e.g. at most 1500 kg, due to its size and strength requirements.

**In** figure 12a, the relocatable traverse 30 is shown at one of the discrete positions thereon on the crane boom, here at device 25, and engaged with the guide wire 10. Then the relocatable traverse 30 is dismounted from the one traverse mounting device 25 on the crane boom whilst remaining engaged to the guide wire 10.

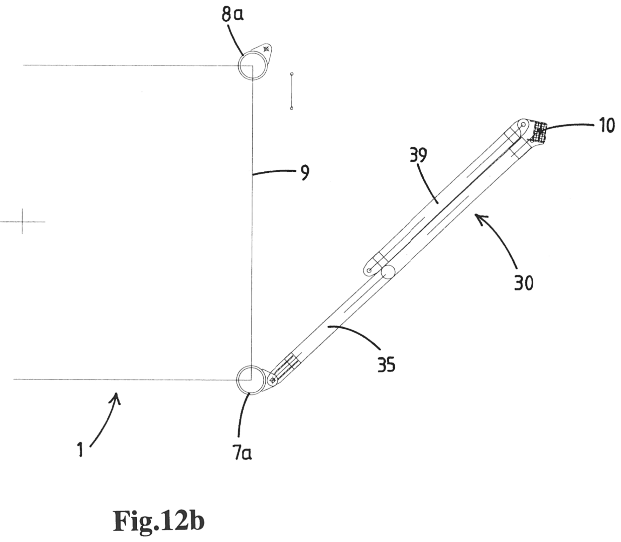

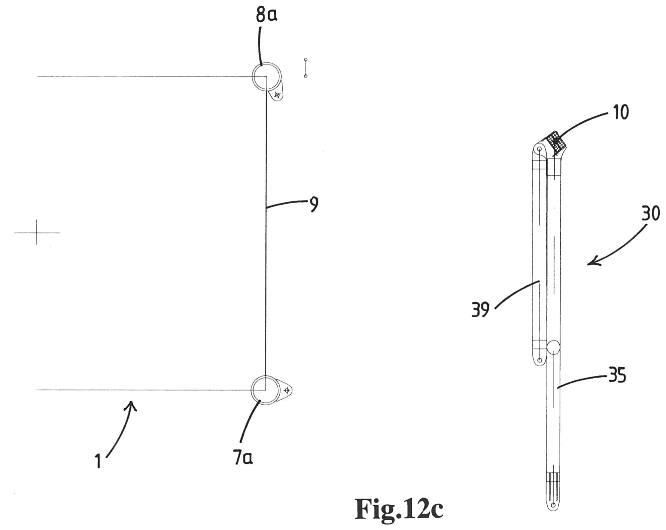

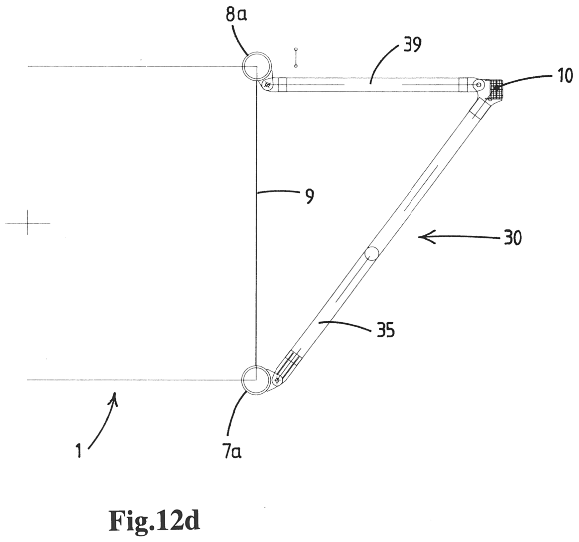

Starting from figure 12a, the brace member 39 is first supported (e.g. by the auxiliary crane) and then disconnected at one end thereof from the boom. Figure 12b then shows that the articulated or hinged relocatable traverse 30 is folded, as the brace member 39 is placed onto the A-frame member 35 that is still attached to both the boom and the guide wire. The guide wire may be slacked. Then the A-frame is released from the boom 1 so that the traverse 30 becomes suspended from the (slacked) guide wire, see figure 12c. The released relocatable traverse 30 is then slid along the guide wire 10, here also along the tagline 15, to one of the multiple traverse mounting devices on the crane boom, e.g. 27. Then the relocatable traverse 30 is mounted to said traverse mounting device, see figure 12d. The guide wire may be re-tensioned.

Whilst the presence of an uppermost traverse 20 is preferred, one may envisage that such traverse 20 is absent and that only the relocatable traverse 30 as discussed herein is provided.

The crane boom may have two legs, e.g. latticed legs, e.g. parallel latticed legs, instead of the illustrated single.

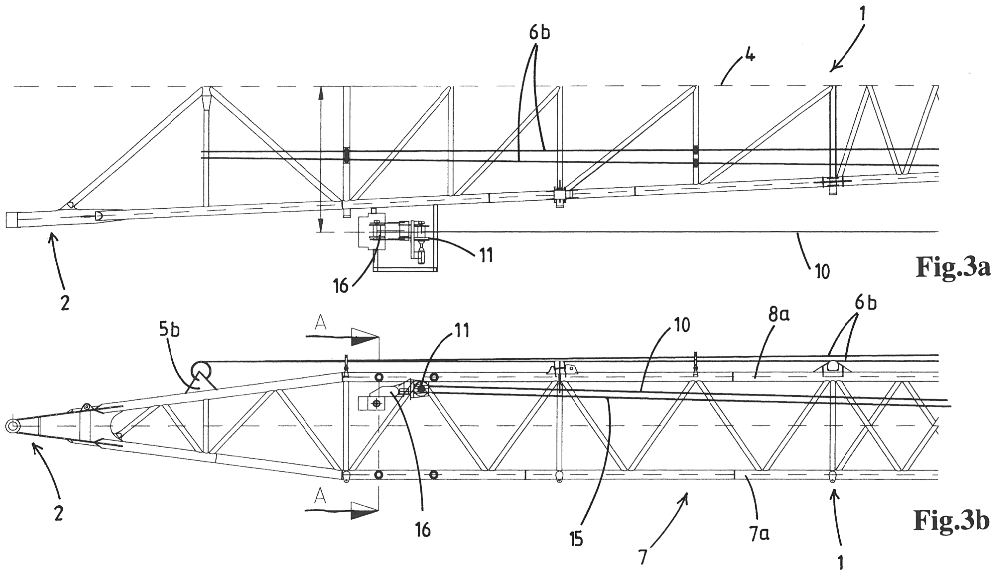

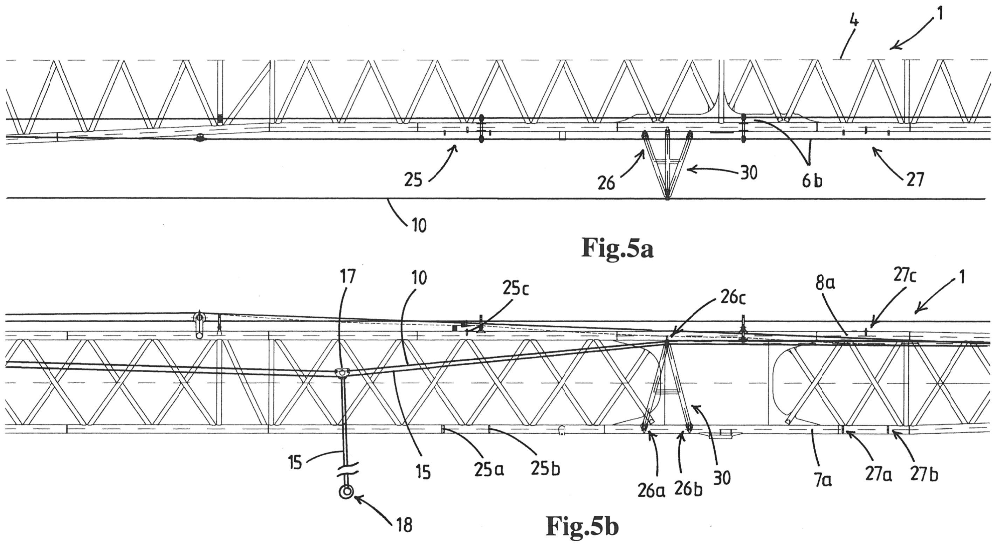

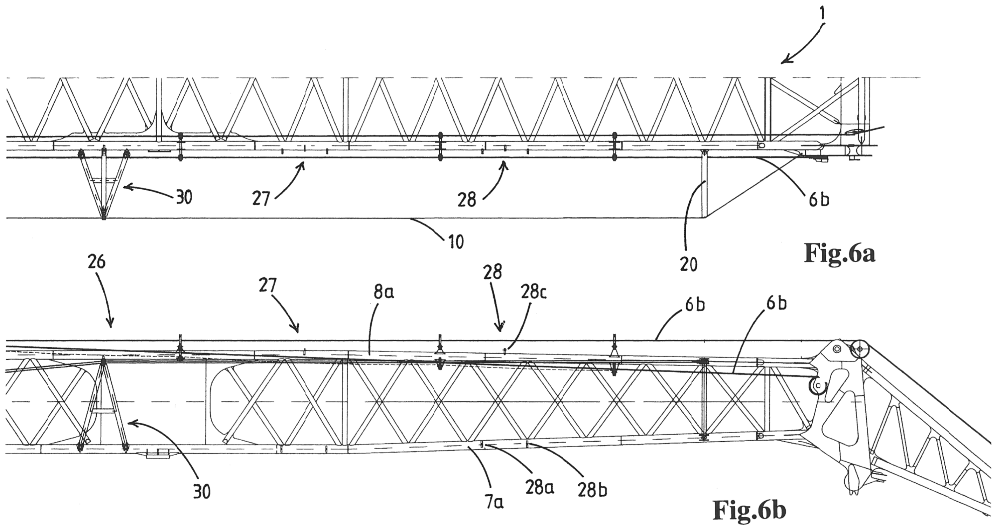

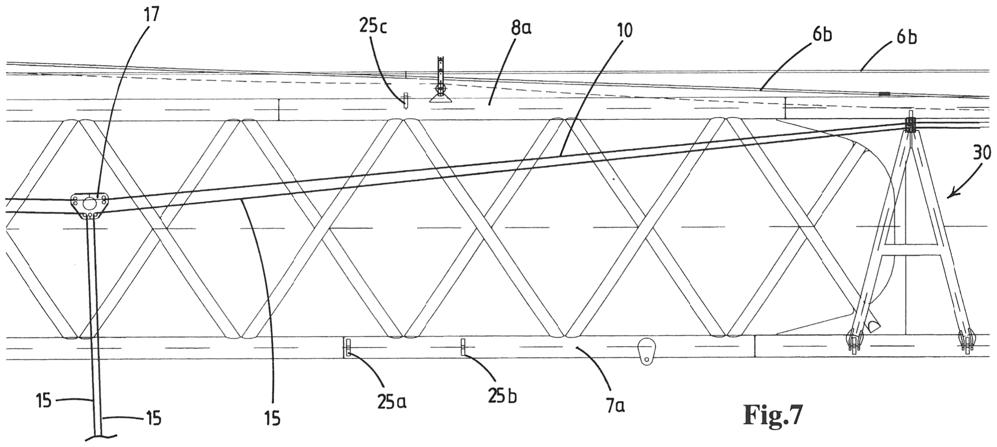

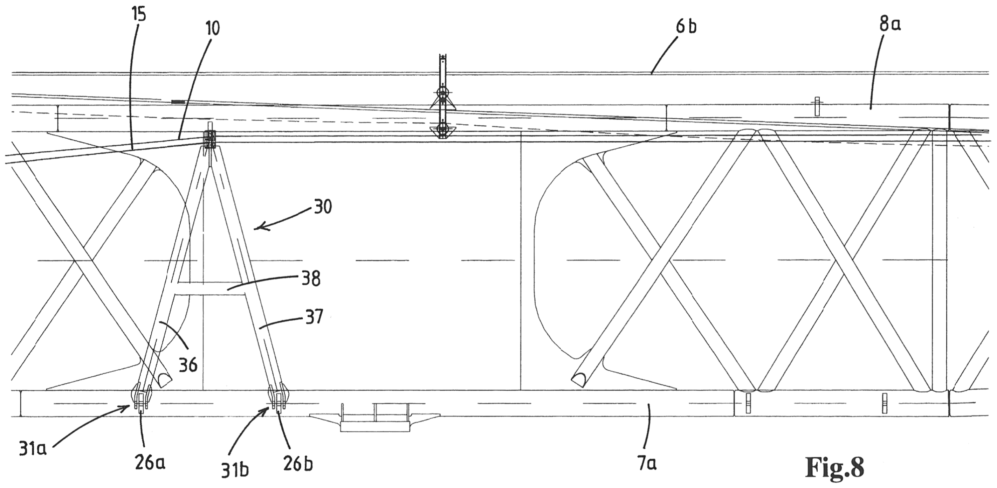

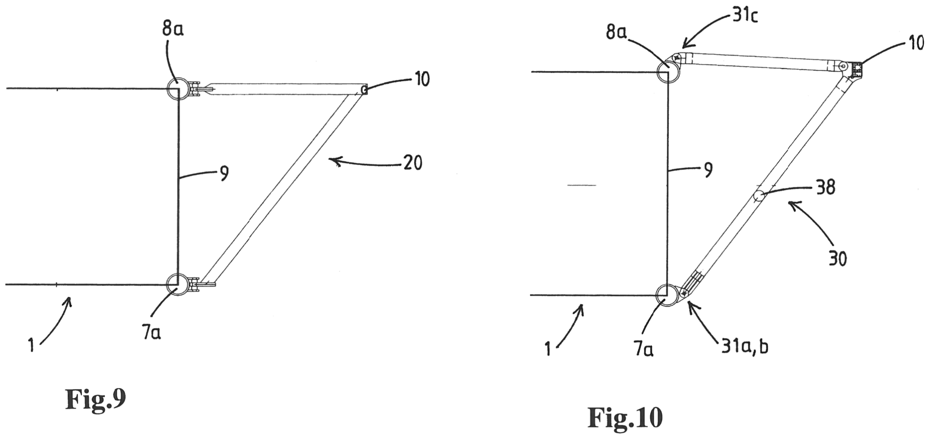

The crane boom may be equipped with four tagline assemblies instead of two as shown in figures 1 - 12. For example, two pairs of tagline assemblies are provided, each pair at a lateral side of the crane boom so that four guide wires and four associated taglines are available for control of the load that is to be lifted by the crane. In an embodiment, the relocatable traverse 30 locally supports the pair of guide wires at that side of the crane boom. In another embodiment, there is a dedicated relocatable traverse 30 for each guide wire of a pair of guide wires, e.g. allowing one relocatable traverse to be placed at a different position along the boom than the other relocatable traverse, e.g. in view of the height that is reached by the associated travelling block that travels over the guide wire during a lift operation performed with the crane.

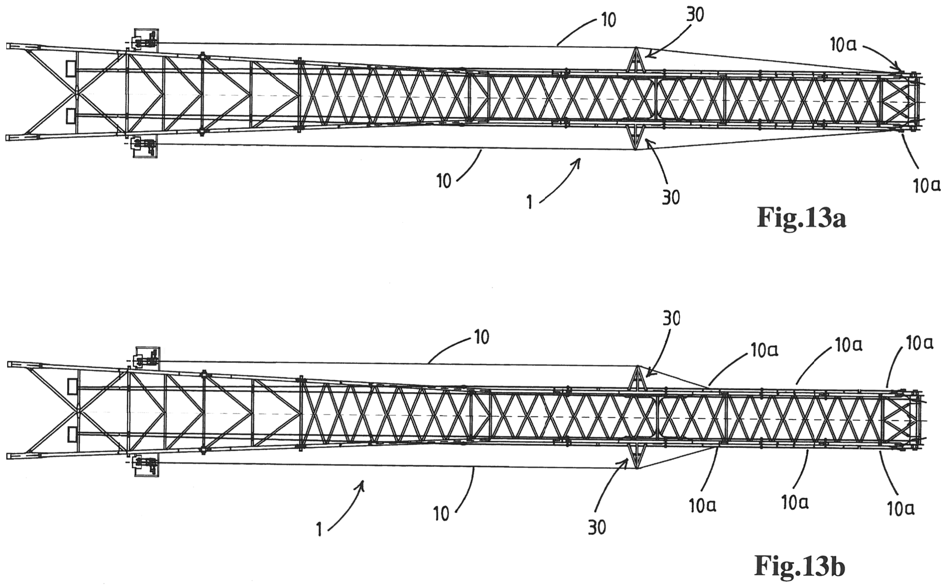

Figure 13a shows an embodiment, wherein the uppermost traverse 20 discussed above is absent. The relocatable traverse 30 can be mounted at a selected one of multiple mounting positions along the boom 1, where said boom is provided with a cooperating mounting device for the traverse 30. The guide wire 10 is anchored at an anchoring device 10a in proximity of the boom tip of the crane boom.

Figure 13b shows an embodiment, wherein the uppermost traverse 20 discussed above is absent. The relocatable traverse 30 can be mounted at a selected one of multiple mounting positions along the boom 1, where said boom is provided with a cooperating mounting device for the traverse 30. The guide wire 10 can be anchored at various anchoring devices 10a distributed along the length of the boom 1, depending on where the relocatable traverse 30 is placed.

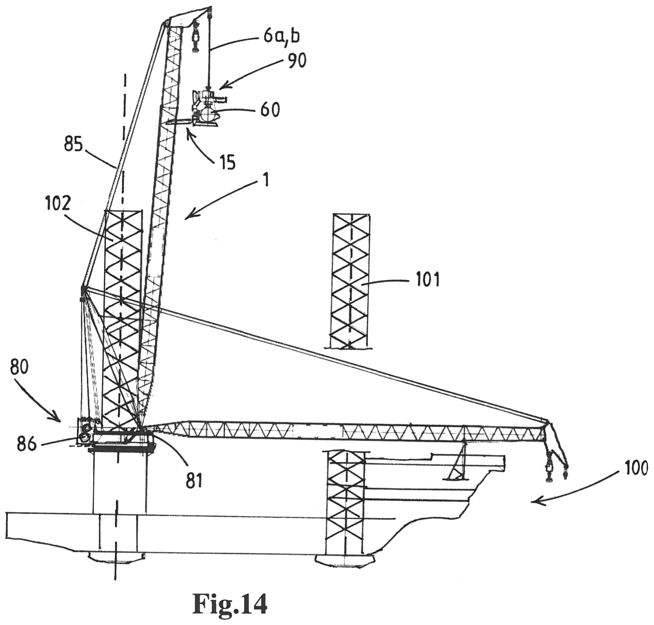

Figure 14 shows a jack-up vessel 100 that is equipped with a crane 80 having the boom 1 of figures 1 and 2. The vessel has a hull and jack-up legs 101, 102 as is known in the art.

The crane 80 here is embodied as an around-the-leg crane. The crane has a crane housing 81 that can slew about a slew axis and is supported on the hull of the vessel. The boom 1 is pivoted at its inner end relative to the housing 81.

The boom 1 can be pivoted up and down by a luffing mechanism, here comprising one or more luffing cables 85 and winches 86.

The figure 14 shows a blade lifting tool 90 that lifts a rotor blade 60 of a wind turbine in horizontal orientation, e.g. in view of fastening the blade with its root end to a hub of the horizontal axis wind turbine.

The tool 90 is suspended from the tip of the boom 1 by means of a winch driven hoist cable 6a,b, e.g. from a single hoist cable.

The tagline system of the crane boom 1 serves to control the blade lifting tool 90 and thereby the rotor blade 60. The tagline system may serve to control the orientation of the tool 90 in the horizontal plane, e.g. a rotation about the suspension from the cable 6a,b and/or the horizontal distance between the tool 90 and the boom 1.

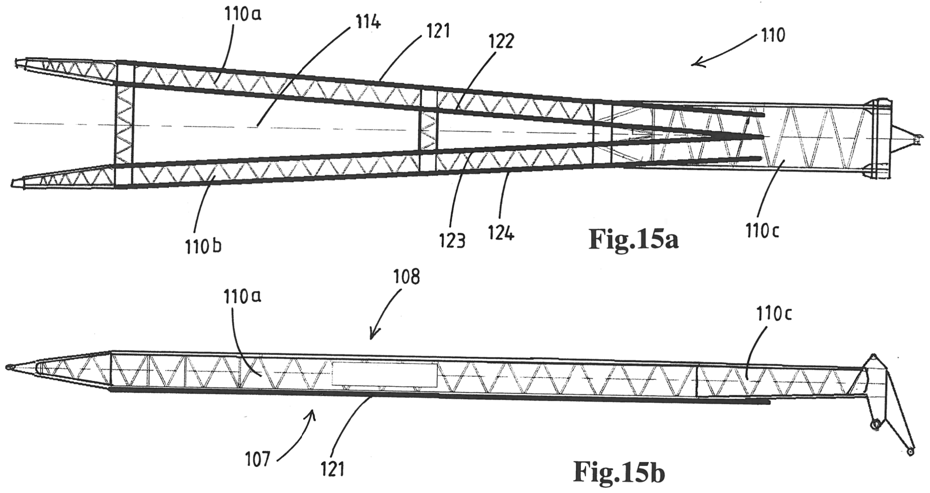

The figures 15a, b depict a latticed crane boom 110 for a crane which is not further depicted, e.g. a crane 80 as shown, e.g. a crane having a slewable crane housing to which the boom is pivotally mounted at its inner end to perform a luffing motion about a horizontal axis.

The crane boom 110 has a length extending from its inner end to a boom tip.

The depicted crane boom 110, shown to scale in the figures, is about 145 meters in length. As explained in the introduction, the continued increase of dimensions of (offshore) wind turbines, requires lifting operations to very large heights, which requires enormous boom lengths and places increased demands on control of the load, e.g. the rotor blade, during the lifting (and/or during fastening the blade to the hub of the wind turbine).

The crane boom 110 has a central plane 114.

The crane boom 110, or the crane housing, may have one or more hoist winches that drive hoist cables 6a,b extending along the length of the boom, e.g. connected to a crane hook from which a load is to be suspended to perform a lifting operation, e.g. a rotor blade of a wind turbine that is to be lifted (or lowered) in a horizontal orientation thereof.

The crane boom 110 has a front side 107, which faces downwards when the boom 110 is on a substantially horizontal boom rest position, and an opposed rear side 108.

The figure 15a illustrates a lambda-design crane boom 110, wherein the crane boom has over a section of its length two legs 110a, 110b, e.g. over at least 50% of its length, which boom further has a distal boom section 110c that adjoins the legs and extends to the tip of the boom 110.

Each of the legs 110a, b and the distal section 110c is embodied as a latticed hollow box structure. The legs each have two main chords in the front side and two main chords in the rear side, interconnected by lattice members to form a rectangular cross-section as is known in the art.

The figures 15a, b illustrate that the crane boom 110 is provided with four laterally spaced elongated guide members 121, 122, 123, 124 extending along the crane boom, at least over a major portion of the length of the boom as preferred.

The guide members 121- 124 form part of a "four tagline assemblies design" - tagline system of the crane boom 110, which will be further discussed below.

It is illustrated that each of the guide members 121, 122, 123, 124 is embodied as a guide rail, so not a guide wire, that is mounted on the structure of the crane boom 110.

In more detail, as preferred, the guide rails are mounted on, or integrated with, the main chords of the two legs 110a, b at the front side of the crane boom.

As can be seen, for the lambda-design it is preferred that the guide rails on the legs thereof are each extended so that they continue over the distal section 110c of the crane boom 110, e.g. ending in proximity of the tip end of the boom 110.

The guide rails 121, 122, 123, 124 each are provided with a respective travelling block of the tagline system, which block is mounted on a respective guide rails for travel along the guide rails, independent from the other blocks.

The guide members 121, 122, 123, 124 are rectilinear in figure 15a. In another embodiment, they may include a bend, e.g. seen in front view on the boom at or near the transition between the legs and the distal section of the boom, e.g. so that the members 121, 122, 123, 124 extend parallel to one another on the distal section of the boom, e.g. so that there spacing is greater than in figure 15a which may allow for enhanced effectiveness of the tagline system.

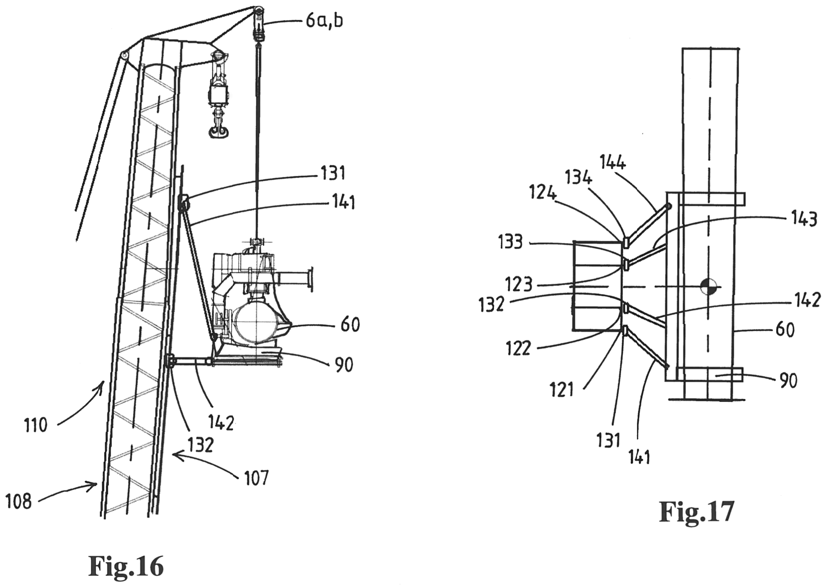

Figure 16 shows the tip region of the crane boom 110, during a lift operation wherein a rotor blade 60 is held by a blade lifting tool 90 that is suspended from hoist cable 6a,b of the crane. As preferred, the center of gravity of the load is vertically underneath the cables.

The figure 17 illustrates the arrangement of the four tagline assemblies of this crane boom.

On the innermost guide rails 122, 123 the travelling blocks 132, 133 travel that are associated with horizontal action taglines 142, 143.

On the outermost guide rails 121, 124 the travelling blocks 131, 134 travel that are associated with vertical action taglines 141, 144.

The taglines 142, 143 act in a substantially horizontal plane between the crane boom 110 and the blade lifting tool 90, which allows for control of the load, in particular of the blade 60, in a horizontal plane. Primarily, these lines 142, 143 allow to control rotational motion of the tool and blade about the suspension cable 6a,b.

The taglines 141, 144 act in a substantial vertical plane between the crane boom 110 and the blade lifting tool 90, which allows for control of the load, in particular of the blade 60, in a vertical plane. Primarily, these lines 142, 143 allow to control rotational motion of the tool and blade about a horizontal axis.

The taglines 141-144 may be arranged in any known manner, e.g. with a terminal end anchored to a top section of the crane boom, then extending down to the travelling block, from there over a sheave to a block that is secured to the load, e.g. to the tool 90, and then back to the travelling block over another sheave down to a tagline winch mounted on the crane boom.

**In** another known arrangement, the tagline winch is mounted on the load, e.g. on the blade lifting tool used for handling a rotor blade of an offshore wind turbine. Then, for example, a terminal end of the tagline is secured to the travelling block. For example, reference is made to WO2021/047745.

**In** another known arrangement, a terminal end of the tagline is secured to the load, e.g. the blade lifting tool, and then passes to the travelling block over a sheave down to a tagline winch mounted on the crane boom.

As discussed, a dedicated active drive may be associated with one or more of the travelling blocks 131-134 to control their displacement along the respective guide rails. For example, in an embodiment, one pair (e.g. the highest pair in the lifting operation) is actively driven, with the other blocks being passive and following the motion of the load. For example, in case some, e.g. a pair, of the blocks are to be arranged higher than the load during lifting and operation of the tagline system, these blocks are preferably actively driven.

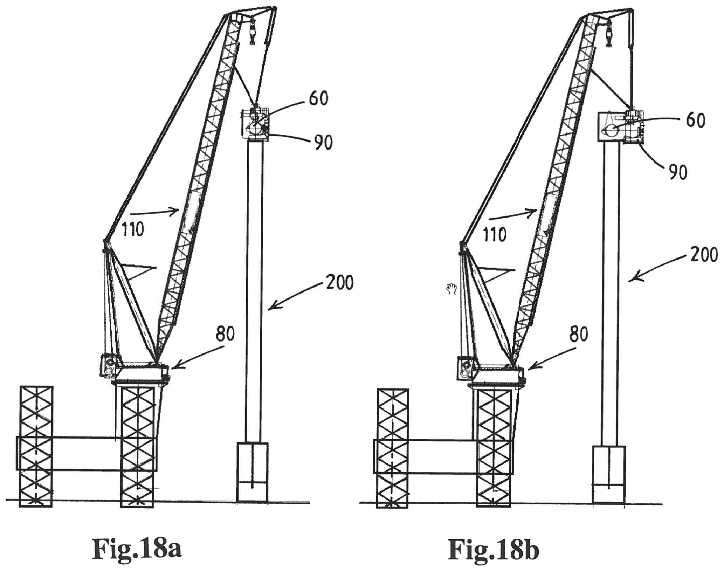

Figures 18a, b illustrate the use of a vessel, here a jack-up vessel, equipped with a crane having a crane boom 110 for the installation or de-installation of a rotor blade 60 of an offshore wind turbine 200. As discussed, this lift operation requires a very lengthy boom, in view of the height of the nacelle/hub for large capacity wind turbines. In these figures the blade lifting tool 90 is held in mirrored position. The orientation of the tool 90, and of the blade 60, is controlled by means of a tagline system as described herein.

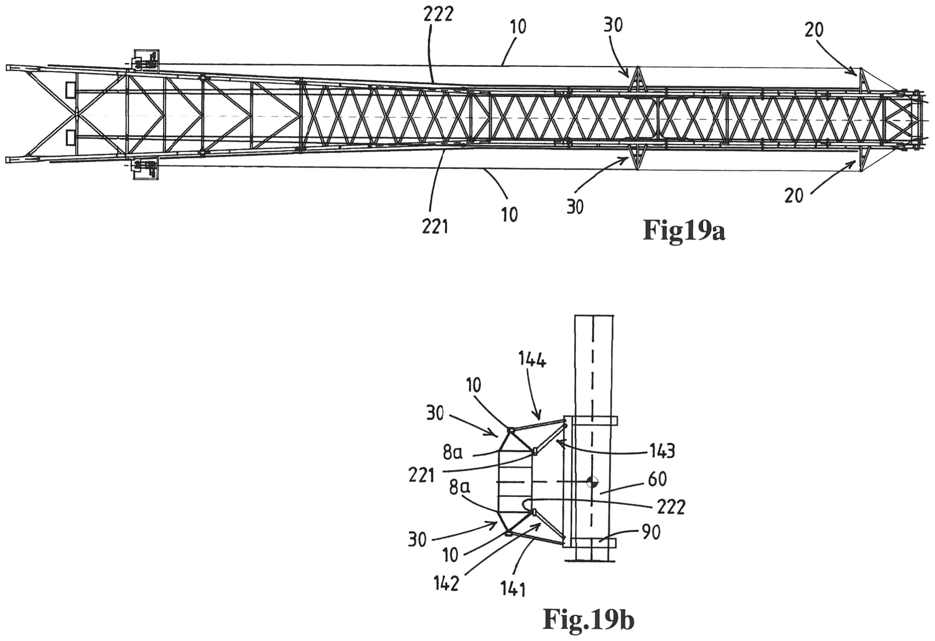

Figure 19a shows, in a view corresponding to figure 1, a hybrid design of the four guide members of the crane boom 210. Herein two guide wires 10, e.g. as described herein or of ordinary design as in mentioned EP 2 889 251, are combined with two guide rails 221,1222 that are secured on the structure of the crane boom 210, e.g. to the outermost main chords at the front side of the boom 210. This allows for a "four tagline assemblies design" of the tagline system of the crane boom, wherein the travelling blocks travel over their respective guide wire or guide rail.

Figure 19b shows, in a view corresponding to the figure 17, the use of the hybrid design of figure 19a.

For example, the guide rails 221, 222 are associated with the horizontal action tagline assemblies 142, 143, as the stability of the rails - compared to the guide wire 10 - contributes to the accuracy of the tagline control of the load in the horizontal plane. The guide wires 10 are the associated with the vertical action tagline assemblies 141, 144 of the system, as deflection of these guide wires 10 has less of an effect on the control in this plane.

**In** embodiments, the load is controlled by a tagline system having five or six tagline assemblies, e.g. with a corresponding number of guide members on the crane boom. For example, in addition to taglines assemblies extending down from their travelling block on the guide member to the load and tagline assemblies extending substantially horizontally from their travelling block to the load, there may be one or two further tagline assemblies of which the travelling blocks are at a lower level so that the tagline extends upwards from the travelling block to the load.

In an embodiment, travelling blocks of tagline assemblies of which the taglines extend in a different direction towards the load, e.g. downwards and upwards, may share a guide member as the travelling blocks will then be spaced from one another on the guide member without the taglines interfering.

### Clauses:

1. Method for performing a lift operation, wherein a load is lifted by means of a crane with a crane boom having a length, which crane boom is provided with a tagline system for controlling the load that is lifted by the crane, e.g. a wind turbine component, e.g. a wind turbine rotor blade in horizontal orientation,
   wherein the tagline system comprises:
   - a guide wire assembly with a guide wire (10) extending along the boom, the guide wire having a lower end and an upper end, wherein a tensioning device, e.g. a tensioning winch (11), is connected to one of said lower end and upper end, and wherein the other of said lower and upper end is secured relative to the crane boom,
   - a tagline assembly, comprising:
      - a tagline (15),
      - a tagline winch (16) for the tagline,
      - a travelling block (17) that is mounted on the guide wire (10) for travel along the guide wire,

   wherein the tagline system further comprises at least one relocatable traverse (30) which is configured to be mounted on the crane boom and to project from the crane boom, which relocatable traverse provides, at a spacing from the crane boom, a support for the guide wire,
   wherein the crane boom is provided with multiple traverse mounting locations (25-28) that are spaced along the length of the crane boom,
   wherein the load is to be lifted in the lift operation to a predetermined lifting height,
   and wherein - prior to the lifting of the load - the relocatable traverse (30) is mounted to the crane boom at a selected one of the multiple traverse mounting locations, which selection is, preferably, made on the basis of the predetermined lifting height, e.g. such that the relocatable traverse is closely above a highest position of the travelling block of the tagline system when the load is lifted to said predetermined lifting height.
2. Method according to clause 1, wherein - for moving the relocatable traverse from one traverse mounting location to another traverse mounting location on the crane boom, e.g. in preparation for a next lift operation - the relocatable traverse is dismounted from the one traverse mounting location on the crane boom whilst remaining engaged to the guide wire, and wherein the relocatable traverse is then slid along the guide wire to the other traverse mounting location, wherein the relocatable traverse is then mounted to said other traverse mounting location.
3. Method according to clause 1 or 2, wherein the crane boom is provided at each of said multiple traverse mounting locations with a traverse mounting device (25-28) for the relocatable traverse (30), which traverse mounting devices are spaced along the length of the crane boom, and wherein the relocatable traverse (30) is provided with a cooperating mounting device (31) allowing to mount the relocatable traverse at a selected one of the multiple traverse mounting devices.
4. Method according to clause 3, wherein the crane boom is provided with at least three traverse mounting devices (25-28) that are spaced from one another along the length of the crane boom.
5. Method according to clause 3 or 4, wherein the multiple traverse mounting devices (25-28) are spaced along the length of the crane boom by at least 5 meters from one another, e.g. between 8 and 12 meters from one another.
6. Method according to any one or more of clauses 1 - 5, wherein the tagline system has an uppermost traverse (20) which is distinct from the relocatable traverse (30) and which is mounted at a fixed location to the crane boom, closer to a tip of the crane boom than the traverse mounting locations for the relocatable traverse (30), wherein:
   - the upper end of the guide wire is secured to the uppermost traverse, or
   - the guide wire is supported by said uppermost traverse and the upper end of the guide wire is secured to an anchoring point on the crane boom.
7. Method according to any one or more of clauses 1 - 6, wherein the crane boom has a central plane (4) and the tagline system is configured such that - at each of the mounting locations of the relocatable traverse (30), e.g. as provided by the multiple traverse mounting devices (25-28) - the lateral distance from the guide wire support provided by the relocatable traverse (30) relative to the central plane is the same, e.g. wherein the relocatable traverse (30) is configured and operated to be brought in different configurations thereof to compensate for different cross-sections, e.g. lateral widths, of the crane boom at the various locations where the relocatable traverse is mountable on the crane boom.
8. Method according to any one or more of clauses 1 - 7, wherein the relocatable traverse is composed of a frame member (35) that is to be connected to a front main chord (7a) of the crane boom, e.g. via a cooperating mounting device (31a,b) to a selected one of multiple traverse mounting devices (25-28) that are spaced along the length of the crane boom and provided on a front main chord (7a) of the crane boom, and wherein the relocatable traverse (30) is further composed of a brace member (39) that is hinged to the frame member (35), which brace member is to be connected to a rear main chord of the crane boom, e.g. via a respective mounting device (31c) thereof to a selected one of multiple traverse mounting devices (25-28) that are spaced along the length of the crane boom and provided on a rear main chord of the crane boom.
9. Method according to clause 8, wherein the frame member (35) and the brace member (39) are configured and operated to include different angles relative to one another when mounted at the various mounting locations on the crane boom, e.g. so as to compensate for a different cross-section, e.g. lateral width, of the crane boom at the various mounting locations.
10. Method according to any one or more of clauses 1 - 9, wherein the relocatable traverse (30) is provided with an eye through which the guide wire (10) extends, e.g. a closed eye or an openable eye allowing for lateral insertion and/or removal of the guide wire into and out of the eye.
11. Method according to clause 3, wherein the multiple traverse mounting devices (25-28) each comprises one or more tabs fitted to main chords of the crane boom, the tabs having a hole, wherein the relocatable traverse (30) is provided with a cooperating mounting device, e.g. one or more tabs having a hole, allowing to mount the relocatable traverse at a selected one of the multiple traverse mounting devices, e.g. a bolt being mounted through the tabs on the chord and the relocatable traverse.
12. A crane with a crane boom having a length, which crane boom is provided with a tagline system for controlling a load lifted by the crane, e.g. a wind turbine component, e.g. a wind turbine rotor blade in horizontal orientation,
   wherein the tagline system comprises:
   - a guide wire assembly with a guide wire (10) extending along the boom, the guide wire having a lower end and an upper end, wherein a tensioning device, e.g. a tensioning winch (11), is connected to one of said lower end and upper end, and wherein the other of said lower and upper end is secured relative to the crane boom,
   - a tagline assembly, comprising:
   - a tagline (15),
   - a tagline winch (16) for the tagline,
   - a travelling block (17) that is mounted on the guide wire (10) for travel along the guide wire,

   wherein the tagline system further comprises at least one relocatable traverse (30) which is configured to be mounted on the crane boom and to project from the crane boom, which relocatable traverse provides, at a spacing from the crane boom, a support for the guide wire,
   wherein the crane boom is provided with multiple traverse mounting locations (25-28) that are spaced along the length of the crane boom,
   such that the tagline system allows to, in use, - prior to the lifting of the load - mount the relocatable traverse (30) to the crane boom at a selected one of the multiple traverse mounting locations, e.g. such that the relocatable traverse is closely above a highest position of the travelling block of the tagline system when the load is lifted to a predetermined lifting height.
13. Crane according to clause 12, wherein - for moving the relocatable traverse from one traverse mounting location to another traverse mounting location on the crane boom, e.g. in preparation for a next lift operation - the relocatable traverse is configured to be dismounted from the one traverse mounting location on the crane boom whilst remaining engaged to the guide wire, and wherein the relocatable traverse is then slidable along the guide wire to the other traverse mounting location, wherein the relocatable traverse is then mountable to said traverse mounting location.
14. Crane according to clause 12 or 13, wherein the crane boom is provided at each of said multiple traverse mounting locations with a traverse mounting device (25-28) for the relocatable traverse (30), which traverse mounting devices are spaced along the length of the crane boom, and wherein the relocatable traverse (30) is provided with a cooperating mounting device (31) allowing to mount the relocatable traverse at a selected one of the multiple traverse mounting devices.
15. Crane according to clause 14, wherein the crane boom is provided with at least three traverse mounting devices (25-28) that are spaced from one another along the length of the crane boom.
16. Crane according to clause 14 or 15, wherein the multiple traverse mounting devices (25-28) are spaced along the length of the crane boom by at least 5 meters from one another, e.g. between 8 and 12 meters from one another.
17. Crane according to any one or more of clauses 12 - 16, wherein the tagline system has an uppermost traverse (20) that is distinct from the relocatable traverse (30) and that is mounted at a fixed location to the crane boom, e.g. closer to a tip of the crane boom than the traverse mounting locations (25-28), wherein:
   - the upper end of the guide wire is secured to the uppermost traverse, or
   - the guide wire is supported by said uppermost traverse and the upper end of the guide wire is secured to an anchoring point on the crane boom.
18. Crane according to any one or more of clauses 12 - 17, wherein the crane boom has a central plane (4) and the tagline system is configured such that - in each of the mounting positions of the relocatable traverse (30), e.g. as provided by the multiple traverse mounting devices (25-28) - the lateral distance from the guide wire support provided by the relocatable traverse relative to the central plane is the same, e.g. wherein the relocatable traverse (30) is configured to be brought in different configurations thereof to compensate for different cross-section, e.g. lateral width, of the crane boom at the various mounting locations.
19. Crane according to any one or more of clauses 12 - 18, wherein the relocatable traverse (30) is composed of a frame member (35) that is to be connected to a front main chord (7a) of the crane boom, e.g. via a cooperating mounting device (31a,b) to a selected one of multiple traverse mounting devices (25-28) that are spaced along the length of the crane boom and provided on a front main chord (7a) of the crane boom, and wherein the relocatable traverse (30) is further composed of a brace member (39) that is hinged to the frame member (35), which brace member is to be connected to a rear main chord of the crane boom, e.g. via a respective mounting device (31c) to a selected one of multiple traverse mounting devices (25-28) that are spaced along the length of the crane boom and are provided on a rear main chord of the crane boom.
20. Crane according to clause 19, wherein the frame member (35) and the brace member (39) are configured to include different angles relative to one another when mounted at the various mounting locations, e.g. so as to compensate for a different cross-section, e.g. lateral width of the crane boom at the various mounting locations.
21. Crane according to any one or more of clauses 12 - 20, wherein the relocatable traverse (30) is provided with an eye through which the guide wire (10) extends in use of the tagline system, e.g. a closed eye or an openable eye allowing for lateral insertion and/or removal of the guide wire into and out of the eye.
22. Crane according to clause 14, wherein the multiple traverse mounting devices (25-28) each comprises one or more tabs fitted to chords of the crane boom, which tabs have a hole, wherein the relocatable traverse is provided with a cooperating mounting device, e.g. a tab having a hole, allowing to mount the relocatable traverse at a selected one of the multiple discrete traverse mounting devices, e.g. a bolt being mounted through the tabs on the chord and the relocatable traverse.
23. Crane according to any one or more of clauses 12 - 22, wherein the crane boom has parallel front and rear main chords (7a,8a) extending along a lateral side thereof with lattice members (9) between said front and rear main chords, wherein the front main chord of the crane boom is provided with multiple traverse mounting devices spaced along the length of the crane boom,
   and wherein the relocatable traverse comprises an A-frame part (35) with two leg members (36) adjoining at an apex and at least one transverse member between the leg members, wherein the A-frame part, e.g. each leg member thereof, is provided - remote from the apex - with a cooperating mounting device that is mountable to said one or more traverse mounting devices on the front main chord,
   and wherein the rear main chord of the crane boom is provided with multiple traverse mounting devices spaced along the length of the crane boom,
   and wherein the relocatable traverse comprises a brace member (39) that is coupled to the apex of the A-frame at one end thereof, and that is provided remote from said one end with a cooperating mounting device that is mountable to said one or more traverse mounting devices on the rear main chord, for example, wherein the A-frame is provided at the apex with an eye or clamp for the guide wire.
24. A crane with a crane boom having a length, which crane boom is provided with a tagline system for controlling a load lifted by the crane, e.g. a wind turbine component, e.g. a wind turbine rotor blade in horizontal orientation,
   wherein the tagline system comprises:
   - a guide wire assembly with a guide wire extending along the boom, the guide wire having a lower end and an upper end, wherein a tensioning device, e.g. a tensioning winch, is connected to one of said lower end and upper end, and wherein the other of said lower and upper end is secured relative to the crane boom,
   - a tagline assembly, comprising:
      - a tagline,
      - a tagline winch for the tagline,
      - a travelling block that is mounted on the guide wire for travel along the guide wire,

   the tagline system further comprises at least one relocatable traverse (30) which is configured to be mounted on the crane boom and project from the crane boom, which relocatable traverse provides, at a spacing from the crane boom, a support point for the guide wire,
   wherein the crane boom has parallel front and rear main chords extending along a lateral side thereof with lattice members between said front and rear main chords,
   wherein the relocatable traverse (30) comprises an A-frame part (35) with two leg members adjoining at an apex, wherein the A-frame part, e.g. each leg member thereof, is provided - remote from the apex - with a mounting device that is mountable to the front main chord,
   and wherein the relocatable traverse comprises a brace member that is coupled to the apex of the A-frame at one end thereof, and that is provided remote from said one end with a mounting device that is mountable to the rear main chord.
25. Crane according to clause 24, wherein the front main chord of the crane boom is provided with multiple traverse mounting devices that are spaced along the length of the crane boom, and wherein the A-frame part, e.g. each leg member thereof, is provided remote from the apex with a mounting device that is mountable to a selected one of the mounting devices on the front main chord,
   and wherein the rear main chord of the crane boom is provided with multiple traverse mounting devices that are spaced along the length of the crane boom, and wherein the relocatable traverse comprises a brace member that is coupled to the apex of the A-frame at one end thereof, and that is provided remote from said one end with a mounting device that is mountable to a selected one of the traverse mounting devices on the rear main chord.
26. A crane boom provided with a tagline system according to one or more of the preceding clauses.
27. A vessel provided with a crane according to one or more of the preceding clauses, e.g. equipped with a blade lifting tool for installation of a rotor blade to an offshore wind turbine.
28. Method for installation of a rotor blade to an offshore wind turbine, wherein use is made of a crane according to one or more of the clauses 12 - 25.

## Claims

1. Crane with a crane boom (110) having a length, which crane boom is provided with a tagline system for controlling a load lifted by the crane, e.g. a wind turbine component, e.g. a wind turbine rotor blade (60) in horizontal orientation,
wherein the tagline system comprises:
- four laterally spaced elongated guide members (121,122,123,124) extending along the crane boom (110), preferably at least over a major portion of the length of the boom, and
- four tagline assemblies, each tagline assembly comprising:
- a tagline (141,142,143,144),
- a tagline winch for the tagline,
- a respective travelling block (131,132,133,134) that is mounted on a respective guide member for travel along the guide member.

2. Crane according to claim 1, wherein the travelling blocks are not mechanically interconnected to one another, so that the travel thereof is basically independent from one another,
e.g. wherein the guide members (121,122,123,124) are not parallel to one another, e.g. the guide members being inclined relative to one another, e.g. at least over a part of a length thereof, e.g. when considering a front view of the crane boom (110).

3. Crane according to claim 1 or 2, wherein the travelling blocks (131,132,133,134) are configured to follow the load during the lift operation up along the boom, i.e. perform a passive motion along the respective guide member (121,122,123,124).

4. Crane according to claim 1 or 2, wherein one or more, e.g. one pair, of the travelling blocks (131,132,133,134), are actively driven along the respective guide member, a dedicated active drive being associated with one or more of the travelling blocks (131,132,133,134) to control their displacement along the respective guide member, e.g. one pair of the travelling blocks being actively driven with the other blocks being passive and following the motion of the load.

5. Crane according to any one or more of the preceding claims, wherein of the tagline system, the four guide members extending along the crane boom (110) are embodied as four guide wires, two guide wires and two guide rails, or four guide rails (121,122,123,124) mounted to the crane boom (110).

6. Crane according to claim 5, wherein the four guide rails (121,122,123,124) are each being provided with a respective travelling block (131,132,133,134) of the tagline system, which block is mounted on a respective guide rails for travel along the guide rails, independent from the other blocks.

7. Crane according to any one or more of claims 1 - 6, wherein a guide rail is directly mounted on, or integrated with, a main chord of the crane boom,
e.g. wherein the crane boom (110) has two crane boom legs (110a,110b) each having main chords at the four corners of the cross-section of the respective leg, both main chords at the front side (107) being provided with a respective rail (121,122,123,124).

8. Crane according to any one or more of claims 1-7, wherein the crane boom (110) has over at least a section of its length two legs (110a,110b), each having two main chords at a front side (107) of the crane boom, wherein on each of said main chords, or integrated with said main chords, a guide rail (121, 122, 123, 124) of the tagline system is provided.

9. Crane according to claim 8, wherein:
- the legs of the crane boom are parallel to one another, as in a H-frame crane boom, and the guide rails extend to proximity of the tip of the boom over the two main chords of each leg, or
- the crane boom has an A-frame design, the two legs being angled to one another, and both main chords at the front side of each leg being provided with a guide rail of the tagline system, or
- the crane boom (110) has a lambda design, the boom continuing at the apex of the two legs (110a,110b) with a single distal boom section (110c), the guide rails (121, 122, 123, 124) extending over the two main chords of each leg and continuing over said distal boom section.

10. Method for performing a lift operation of a load by means of a crane according to any one or more of claims 1-9, wherein the load is lifted by the crane and wherein the tagline system is used to control the load.

11. Method according to claim 10, wherein one pair of taglines (142,143) is used when performing a lift operation to control the load primarily in a horizontal plane, e.g. to control rotation of the load about a hoist cable (6a,b) from which the load is suspended, the other pair of taglines (141,144) is primarily used for control of the load in a vertical plane, e.g. to control orientation of the load about a horizontal axis.

12. Method according to claim 11, wherein the outermost tagline assemblies of the four tagline assemblies are used for control of the load in the vertical plane, i.e. rotation about a horizontal axis, and wherein the innermost tagline assemblies of the four tagline assemblies are used for control of the load in the horizontal plane, e.g. rotation of the load about a vertical axis formed by the hoist cable (6a,b) or cables from which the load is suspended.

13. Method according to claim 11 or 12, wherein during a lift operation performed by the crane, one pair of travelling blocks (132,133) is at a lower level than the other pair of travelling blocks (131,134),
e.g. the travelling blocks (131,134) of the tagline assemblies used for control in the vertical plane of the load being higher up along the crane boom (110) during the lift operation than the travelling blocks (132,133) of the tagline assemblies used for control in the horizontal plane of the load.

14. Method according to claim 11, 12, or 13, wherein one or more, e.g. one pair, of the travelling blocks (131,132,133,134), are actively driven along the respective guide member by a dedicated active drive being associated with one or more of the travelling blocks (131,132,133,134) to control their displacement along the respective guide member, e.g. one pair (131,134) of the travelling blocks being actively driven with the other blocks being passive and following the motion of the load, e.g. wherein during a lift operation performed by the crane, one pair of travelling blocks (132,133) is at a lower level than the other pair of travelling blocks (131,134), the other pair of travelling blocks being actively driven.

15. Method according to any one or more of claims 10-14, wherein the load is a blade lifting tool (90) used for lifting a rotor blade (60) of a wind turbine (200), e.g. in horizontal orientation.
